# EUROPEAN PATENT SPECIFICATION

(11) **EP 2 950 411 B1**
(45) Date of publication and mention of the grant of the patent: **06.06.2018**
(21) Application number: 13873118.7
(22) Date of filing: 23.01.2013
(51) Int. Cl.: H02G 15/18, H02G 15/00, G02B 6/44

(54) **CABLE CONNECTION CASING**
KABELVERBINDUNGSGEHÄUSE
BOÎTIER DE CONNEXION DE CÂBLE

(43) Date of publication of application: 02.12.2015
(73) Proprietor: Chi, Yu-Fen, Yonghe City, Taipei County 234 (TW)
(72) Inventor: HSING, Chih-Kuang, Yonghe City Taipei County 234 Taiwan (TW)
(74) Representative: Patentanwaltskanzlei WILHELM & BECK
(86) International application number: PCT/CN2013/070901
(87) International publication number: WO 2014/113943

(56) References cited:
- WO-A1-00/45491
- CN-A- 1 338 138
- CN-A- 101 820 159
- CN-A- 102 313 942
- CN-A- 102 313 943
- CN-U- 202 009 216
- CN-Y- 2 411 609
- US-A- 4 287 386
- US-A- 4 607 469

## Description

### FIELD OF THE INVENTION

The present invention relates to a cable splice box, and specifically relates a cable splice box treated with an elastic contracting sleeve for a mid-span branch connection. The present invention provides improvements regarding the issues of difficulty of operation, high cost and the inconsistency of construction quality.

### BACKGROUND OF THE INVENTION

In the technical field of wire transmissions such as telecommunications, cable TV and monitoring systems, fiber-optic cable is widely used for transmitting audio, data and video messages. The fiber-optic cable transmits messages to any designated location with the assistance of a cable splice box to operate a connection and a splice of the cables. The cable splice box is equipped with an end surface for a cable passing therethrough, and the end surface or a cable passing therethrough is disposed with a cable inlet and a cable outlet to allow the cable to pass in and out the cable splice box through the end surface or a cable passing therethrough to perform a connection and branch connection with the fiber-optic cable.

The conventional fiber-optic cable is mostly used as an intermediate backbone cable. The cable splice box is mostly used for a linear splice operation, which is an operation of connecting a truncated fiber-optic cable with one other truncated fiber-optic cable, and a branching splice operation, which is an operation of connecting a cable having more cores with a number of other cables having fewer of the cores. Accordingly, the end surface of a cable passing through the cable splice box is equipped with a plurality of cable inlets and outlets, each of which usually provide a truncated fiber-optic cable to pass in and out the cable splice box.

Present communication networks have expanded into a wide band service era called fiber-to-the-home (FTTH). Telecommunication vendors have to utilize cable splice boxes to connect a variety of main fiber-optic cables distributed everywhere along the way to the respective optic equipment at the user end through branch cable connections by utilizing the cable splice boxes without entirely cutting off the existing cables. Therefore, the cable splice boxes must be applicable not only to the truncated cables passing in and out of the cable splice boxes, but also to the non-truncated cables passing in and out of the cable splice boxes, which means that the cable splice boxes must be applicable for a mid-span branch connection operation, which is an operation to further connect some small quantity of unused cables split from a backbone cable with multi-core optical fibers in the middle portion via a cable splice box to one other intermediate splice cable to connect to a new user end when fiber-optic cable service is required for a customer. In most such cases, the backbone fiber-optic cable, and specifically the fiber-optic cable in use, cannot be cut off.

The waterproofing treatment operation to the cable inlet and outlet of the cable splice box is very important. Especially because the cable splice boxes installed therein are immersed in water for a long period of time because there is always water accumulation in the manhole and hand hole underground. Therefore, the cable splice boxes must prevent water leakage. Otherwise, once water flows into the cable splice boxes, the fiber-optic cables capable of being used normally for over 20 years will deteriorate and become brittle in only a couple of years, which adversely affects the quality of the transmission of the broadband signals.

In the prior art, the methods of waterproofing treatment to a cable splice box, a cable entering the cable splice box through the cable inlet and outlet disposed on the end surface of a cable splice box include three types: the bolt mechanical type, the heat-shrinkable type, and the elastic contracting sleeve type. The components of the bolt mechanical type are complicated, the construction requirements are complicated, and the cost is high. The cost of the heat-shrinkable type is comparatively low. However, the heat-shrinkable type requires the use of torching to heat the heat-shrinkable tube made of plastic material during construction. The procedure may generate toxic gases and cause accidents. It is also difficult to control and maintain consistent construction quality, and it will adversely influence the waterproof effect due to cable bending and distortion. This is inadequate for an underground fiber-optic cable installed in a manhole where water accumulates all year round although it is adequate for use in a hanging or a wall-mounted environment. The elastic contracting sleeve type is the most convenient for construction. In addition, the elastic contracting sleeve type also has the advantages of highly consistent construction quality, an excellent water-proof effect, and a low cost of materials. Therefore, the adoption of the elastic contracting sleeve for performing the waterproofing treatment is the best choice.

When the waterproofing treatment to the cable inlet and outlet of the cable splice box is performed using the elastic contracting sleeve, the end surface passing through the cable must be formed with a hollow cylindrical tube in a circle-like or ellipse-like shape. The hollow cylindrical tube provides passage for the cable implemented in the connection operation in the cable splice box to pass therethrough. If waterproofing treatment is implemented using an elastic contracting sleeve, the portion enveloped by contracting the elastic contracting sleeve must be a cylindrical object having no dent or gap on its outer surface and having a cross-section in one of a circle-like or ellipse-like shape. For example, the elastic contracting sleeve is disposed on a cable having a cross-section in a circle-like shape, a cable inlet and outlet of a hollow cylindrical tube, each of which is in a circle-like or ellipse-like shape, and a cable having a cross-section in an ellipse-like shape, to achieve a good waterproof effect. However, for a cable splice box where the waterproofing treatment is done using the elastic contracting sleeve, during the intermediately introduced branched connection operation, on the condition that the cable must not be truncated, the portion of the cable to be operated with the intermediately introduced branched connection must be folded in a U shape, and then the U-shaped cable having two cable segments is inserted and passes through the elastic contracting sleeve and the hollow cylindrical tube, which is the cable inlet and outlet, disposed on the end surface for the cable passing through the cable splice box, and so the cable enters the cable splice box, to implement the intermediately introduced branched connection operation. However, the cross-sections of the two cable segments of the U shaped cable are circle-like and have different circle centers. After the two cable segments are directly enveloped with an elastic contracting sleeve, there will be gaps between the two cable segments and so it is unable to form a waterproof structure. Therefore, it is necessary to utilize a gap-filling waterproof auxiliary device disposed on the U-shaped cable with two cable segments to form a first waterproof structure which is cylindrical, which makes the two cross-sections of the two cable segments into one cross-section in a circle-like or ellipse-like shape without having any dent or gap on the outer surface of the first waterproof structure. And then the U-shaped cable with two cable segments is inserted and passes through the elastic contracting sleeve and the hollow cylindrical tube, i.e. the cable inlet and outlet, disposed on the end surface for the cable passing through the cable splice box, wherein a portion of the first waterproof structure is not inserted into the hollow cylindrical tube, and the elastic contracting sleeve contracts to envelop an external portion of the hollow cylindrical tube and an external portion of the first waterproof structure that is not inserted into the hollow cylindrical tube. Due to the fact that there is no dent or gap on the outer surface of the first waterproof structure with a cross-section in a circle-like or ellipse-like shape, a second waterproof structure is accordingly formed. Therefore, it is possible to complete an intermediately introduced branched connection operation by using an elastic contracting sleeve to implement a waterproofing treatment between the cables to be intermediately introduced branched connected and the cable inlet and outlet when using a cable splice box to implement an intermediately introduced branched connection operation.

In the prior art, the methods to form the first waterproof structure by using a gap-filling waterproof auxiliary device include the following.
1. Only a waterproof adhesive substance, or tape, having adhesion and plasticity is used in a great amount to wind and envelop a position of the two cable segments of the U-shaped cable to be inserted into the elastic contracting sleeve to implement the waterproofing treatment. A short section of the wound and enveloped position is hand moulded to obtain a cylindrical body having a cross-section of a circle-like or ellipse-like shape. Accordingly, the first waterproof structure is formed. However, disadvantages include that the resultant shapes and sizes of the cylindrical bodies, and the appearances are free from any dent or gap formed on the surfaces of the cylindrical bodies, each of which has a cross-section having a circle-like or ellipse-like shape, formed each time by each person after being hand moulded will never be identical, so as to cause the issues of inconsistency to the construction quality. After being hand moulded and before being enveloped by the elastic contracting sleeve, the shape of the position of the short section could be changed because of an impact or squeeze in the construction process.
2. Each position of the two cable segments of the U-shaped cable to undergo the waterproofing treatment by using an elastic contracting sleeve is wound and enveloped with an adequate amount of adhesive tape having adhesion and plasticity. And then a solid bundling body having two pieces capable of matching the two cable segments is assembled thereto to form a structure having a circle-like or ellipse-like cross-section without a dent or gap therebetween. The bundling body is tightly screwed to form the first waterproof structure. This type of construction can prevent the inconsistency problem of construction quality previously mentioned. However its disadvantages include that the components and construction sequence are complicated, the operation is difficult, and the cost is high. In addition, it is impossible to take advantage of the radial contracting force exerted by the elastic contracting sleeve to continuously maintain tightness between the solid bundling body and the two cable segments.

Based on the above descriptions, global telecommunication vendors and the related suppliers began to widely adopt fiber-optic cables to replace traditional cables, and widely utilize cable slice boxes for the mid-span branch connection operations to connect a variety of optical fibers in the main fiber-optic cables distributed everywhere along the way to the respective optic equipment at the user end through branch cable connections. It is possible to solve the problems of difficult operation, high cost and inconsistent construction quality when implementing a waterproofing treatment to the cable for a mid-span branch connection by using an elastic contracting sleeve, and to develop and manufacture a novel and advanced cable splice box with easier operation, much lower cost, more consistent construction quality and sufficient utilization of the radial contracting force of the elastic contracting sleeve to continuously maintain the tightness of the first waterproof structure in the cable splice box. Accordingly, the construction quality of the fiber-optic cable network of the related vendors will be significantly improved.

CN 102 313 943 A discloses an optical connecting shell with a cable passing through the shell, wherein a first waterproof structure for receiving a cable is arranged, wherein a second waterproof structure including an elastic shrinking tube is arranged.

WO 00/45491 A1 discloses an end seal assembly adapted to seal a space between a cable and a closure to restrict fluid transfer through the seal.

In order to overcome the above drawbacks of the prior art the current invention suggests a cable splice box according to claim 1, a method for forming a cable splice box according to claim 8 and a waterproof splice box unit according to claim 11. The brief description of the present invention is as follows.

### SUMMARY OF THE INVENTION

To overcome the shortages of the prior art, the purpose of the present invention is to provide a cable splice box. The cable splice box includes an end surface passing therethrough a cable having two cable segments respectively passing in and out of the cable splice box; a first waterproof structure, including a pillar including a pillar body having at least two longitudinal grooves, each of which has a bore diameter X configured to accommodate one of the two cable segments; a longitudinal surface having at least two longitudinal slits, each of which has an operating slit width Y larger than or equal to X, corresponds to one of the at least two longitudinal grooves, and forms an opening thereon; and at least pieces, each of which forms one edge of one of the at least two longitudinal slits; and a hollow cylindrical tube disposed on the end surface, having an outer surface and providing a mid-span branch connection; and a second waterproof structure including an elastic contracting sleeve disposed on the outer surface and enveloping the first waterproof structure. In addition, the outer surfaces of the at least two longitudinal elastic pieces jointly (integrally, or combined) and partly define the longitudinal surface. In addition, the pillar is an elastic body. In addition, the bore diameter X is one of the minimum and maximum bore diameters of each of the at least two longitudinal grooves. In addition, in the cable splice box, each of the at least two longitudinal elastic pieces has two extensions defining two edges of each of the at least two longitudinal slits; the slit width Y is selected from the group consisting of an original slit width W₁ less than X and greater than zero, an original slit width W₂ equal to zero, and an original slit width W₃ which is unmeasurable as a result of the two overlapping extensions. In addition, the cable splice box further includes a waterproof glue having adhesiveness and plasticity and disposed between one of the at least two longitudinal grooves and one of the two cable segments passing therethrough. In addition, the first waterproof structure has a cross-section being one of a circle-like or ellipse-like shape.

The present invention also discloses a pillar used for a cable splice box to form therein a waterproof structure. The pillar includes a pillar body having at least two longitudinal grooves, each of which has a bore diameter X configured to accommodate a cable segment; a longitudinal surface having at least two longitudinal slits, each of which has a width Y larger than or equal to X, corresponds to one of the two longitudinal grooves, and forms an opening thereon; and two longitudinal elastic pieces, each of which is disposed on one of the at least two longitudinal slits to keep the cable segment in the respective longitudinal groove. In addition, the outer surfaces of the at least two longitudinal elastic pieces jointly (integrally, or combined) and partly define the longitudinal surface. In addition, the pillar is an elastic body. In addition, the bore diameter X is one of the minimum and maximum bore diameters of each of the at least two longitudinal grooves. In addition, in the pillar, each of the at least two longitudinal elastic pieces has two extensions defining two edges of each of the at least two longitudinal slits; the slit width Y is selected from the group consisting of an original slit width W₁ less than X and greater than zero, an original slit width W₂ equal to zero, and an original slit width W₃ which is unmeasurable as a result of the two overlapping extensions. In addition, the pillar coordinates with an elastic contracting sleeve to form a waterproof splice box unit. In addition, the pillar further includes a waterproof glue having adhesiveness and plasticity and disposed between one of the at least two longitudinal grooves and the cable segment passing therethrough. In addition, the first waterproof structure has a cross-section being one of a circle-like or ellipse-like shape.

The cable splice box of the present invention includes a pillar, by which the cable for the mid-span branch connection and the pillar form the first waterproof structure in a cylindrical shape having no dent or gap between the cable and the pillar. And the first waterproof structure has a cross-section in a circle-like or ellipse-like shape. Accordingly, the waterproofing treatment between the cable inlet and outlet, which is disposed on the hollow cylindrical tube on the end surface for a cable passing through the cable splice box, and the cables by using the cable splice box with the elastic contracting sleeve is novel and advanced over the prior technique. So the operation is much easier, the cost is much lower, and the construction quality is more consistent. Moreover, in the cable splice box, the radial contracting force of the elastic contracting sleeve continuously maintains the tightness of the first waterproof structure. The contraction quality of the fiber-optic cable network built by the related suppliers will substantially improve.

### BRIEF DESCRIPTION OF THE DRAWINGS

Fig. 1(A) is a diagram showing a cable splice box according to the first Embodiment of the present invention;
Fig. 1(B) is a diagram showing an end surface for a cable passing therethrough and a hollow cylindrical tube in the cable splice box according to the first Embodiment of the present invention;
Fig. 1(C) is a diagram showing a cable for a mid-span branch connection, which passes through a hollow cylindrical tube and so passes in and out of the cable splice box according to the first Embodiment of the present invention;
Fig. 2(A) is a diagram showing a pillar in the cable splice box according to the first Embodiment of the present invention;
Fig. 2(B) is a diagram showing a cross-section of a cylindrical portion of the pillar in the cable splice box according to the first Embodiment of the present invention;
Fig. 2(C) is a diagram showing a cross-section of a cylindrical portion of the pillar according to the first Embodiment of the present invention, wherein a longitudinal slit having a width Y is larger than a bore diameter X of the longitudinal groove;
Fig. 3(A) is a diagram showing an elastic contracting sleeve in the cable splice box according to the first Embodiment of the present invention;
Fig. 3(B) is a diagram showing a waterproof glue having adhesiveness and plasticity in the cable splice box according to the first Embodiment of the present invention;
Fig. 3(C) is a diagram showing a waterproof band having adhesiveness and plasticity in the cable splice box according to the first Embodiment of the present invention;
Fig. 4(A) is a diagram showing a pillar in the cable splice box according to the first Embodiment of the present invention;
Fig. 4(B) is a diagram showing the position that two cable segments for a mid-span branch connection are wound by the waterproof band having adhesiveness and plasticity before the elastic contracting sleeve is used for a waterproofing treatment in the cable splice box according to the first Embodiment of the present invention;
Fig. 4(C) is a diagram showing a first waterproof structure formed by the pillar and the cables having two cable segments for a mid-span branch connection in the cable splice box according to the first Embodiment of the present invention;
Fig. 4(D) is a diagram showing a cross-section of a cylindrical portion of the first waterproof structure in the cable splice box according to the first Embodiment of the present invention;
Fig. 5(A) is a diagram showing the cable splice box according to the first Embodiment of the present invention, wherein the elastic contracting sleeve is going to contract to envelop an outer surface of the hollow cylindrical tube and an outer surface of the first waterproof structure;
Fig. 5(B) is a diagram showing the cable splice box according to the first Embodiment of the present invention, wherein the elastic contracting sleeve is going to contract to envelop an outer surface of the hollow cylindrical tube and an outer surface of the first waterproof structure, to form the second waterproof structure;
Fig. 5(C) is a diagram showing the cable splice box according to the first Embodiment of the present invention, wherein the elastic contracting sleeve is going to contract to envelop an outer surface of the hollow cylindrical tube and an outer surface of the first waterproof structure, and form the second waterproof structure;
Fig. 5(D) is a diagram showing the cable splice box according to the first Embodiment of the present invention, wherein the cable splice box is implemented with the waterproofing treatment by using the elastic contracting sleeve for a mid-span branch connection;
Fig. 6(A) is a diagram showing a cross-section of a pillar in a cable splice box according to the second Embodiment of the present invention, wherein the original slit width W₂ of the two grooves of the pillar equals 0, representing that the two edges of the longitudinal elastic pieces contact each other;
Fig. 6(B) is a diagram showing a cross-section of a pillar in a cable splice box according to the second Embodiment of the present invention, wherein a longitudinal slit has a slit width Y after operation being larger than the bore size X of the longitudinal groove of the pillar;
Fig. 6(C) is a diagram showing a cross-section of a pillar of the first waterproof structure in a cable splice box according to the second Embodiment of the present invention;
Fig. 7(A) is a diagram showing a cross-section of a pillar in a cable splice box according to the third Embodiment of the present invention, wherein the original slit width W₃ of the two grooves of the pillar is unable to be measured as a result of the two overlapping extensions, and W2 equals 0, representing that the two edges of the longitudinal elastic pieces are in contact with each other;
Fig. 7(B) is a diagram showing a cross-section of a pillar in a cable splice box according to the third Embodiment of the present invention, wherein a longitudinal slit has a slit width Y after the operation being larger than the bore size X of the longitudinal groove of the pillar;
Fig. 7(C) is a diagram showing a cross-section of a pillar of the first waterproof structure in a cable splice box according to the third Embodiment of the present invention;

### Description of the reference numerals

1 cable splice box
2 end surface
3 hollow cylindrical tube
4 cable for mid-span branch connection
401 two cable segments of the cable for the mid-span branch connection
402 portion of the cable for the mid-span branch connection
5 pillar
6 pillar body
7 longitudinal groove
8 longitudinal surface
9 longitudinal slit
10 opening
11 elastic piece
12 first waterproof structure
13 elastic contracting sleeve
14 outer surface of the hollow cylindrical tube
15 outer surface of the first waterproof structure
16 second waterproof structure
17 adhesive glue having adhesiveness and plasticity
X bore size of the longitudinal groove
Y slit width after the operation
W₁ original slit width of the longitudinal groove of the pillar of the first Embodiment
W₂ original slit width of the longitudinal groove of the pillar of second Embodiment
W₃ original slit width of the longitudinal groove of the pillar of third Embodiment

### DETAILED DESCRIPTION OF THE PREFERRED EMBODIMENT

The cable splice box disclosed in the present invention will now be described for more concrete understanding with reference to the following embodiments, so it can be implemented by the person skilled in the art. However, the implementation of the present invention is not restricted to the following embodiments. The person skilled in the art can predict other embodiments according to the technical spirit of the embodiments disclosed in the present invention. Those predicted embodiments still belong to the scope of the present invention.

### The first Embodiment

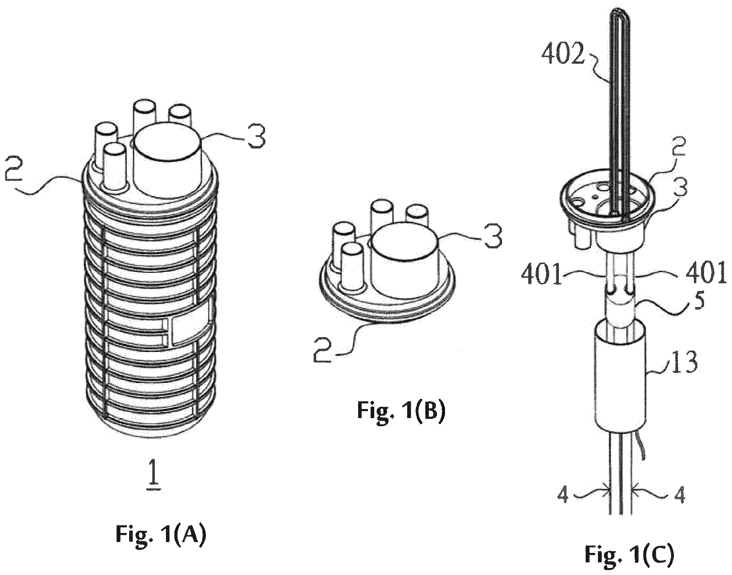

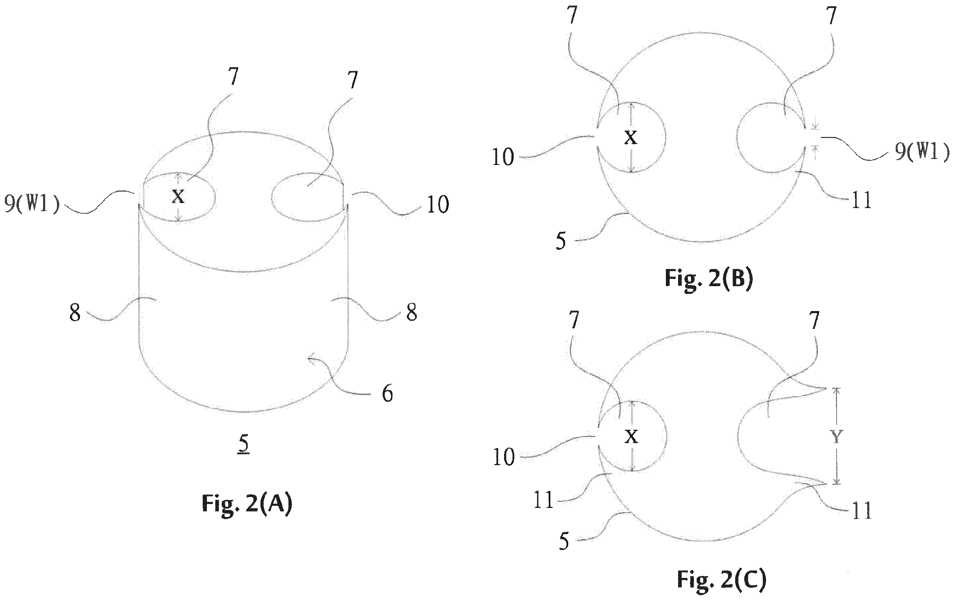

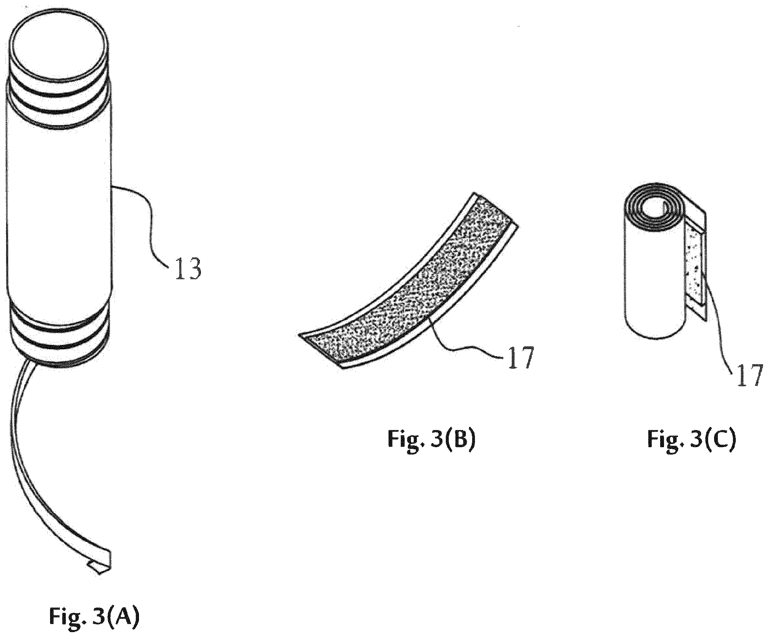

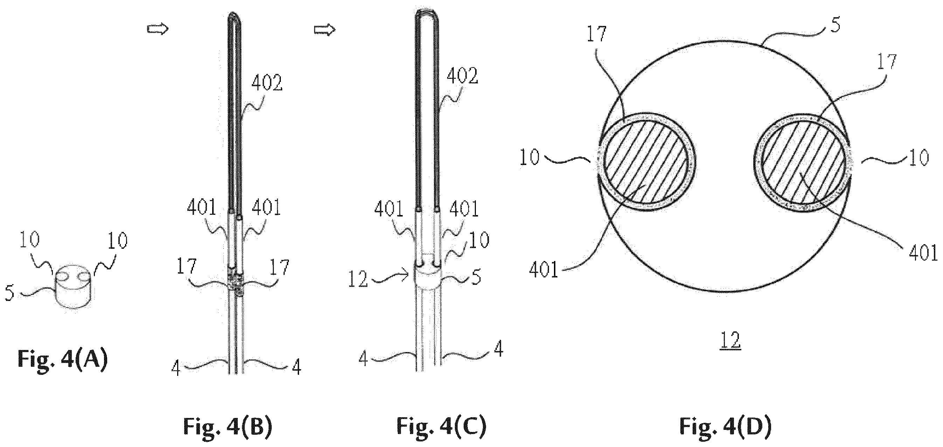

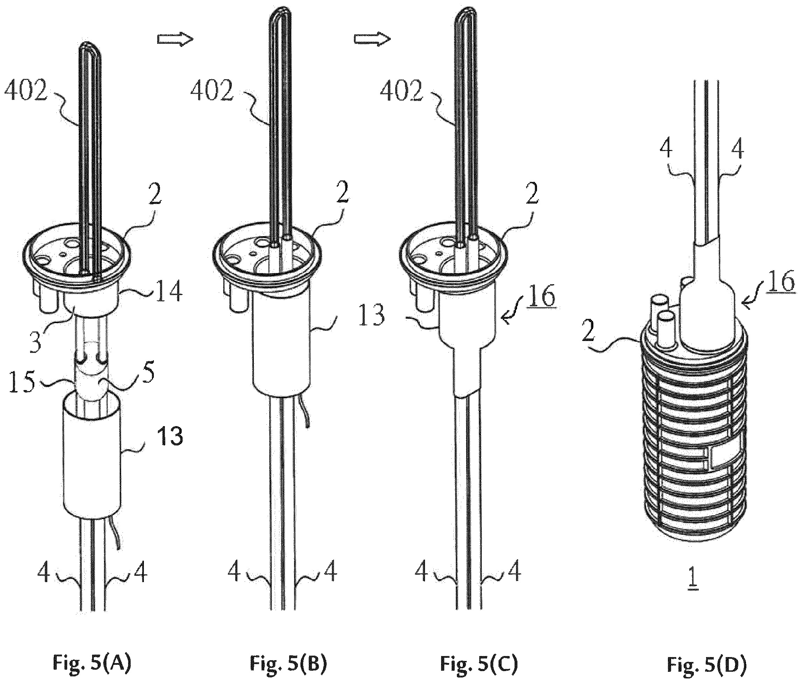

Please refer to Figs. 1(A)-5(D), each of which shows a cable splice box 1 according to the First Embodiment of the present invention. The cable splice box 1 includes an end surface 2 passing therethrough a cable 4 having two cable segments 401 respectively passing in and out the cable splice box 1; a first waterproof structure 12 including a pillar 5 (please refer to Fig. 2(A)) including a pillar body 6 having at least two longitudinal grooves 7, each of which has a bore diameter X configured to accommodate one of the two cable segments 401; a longitudinal surface 8 having at least two longitudinal slits 9, each of which has a width Y larger than or equal to X, corresponds to one of the at least two longitudinal grooves 7, and forms an opening 10 thereon; and at least two elastic pieces 11, each of which forms on one edge of one of the at least two longitudinal slits 9; and a hollow cylindrical tube 3 disposed on the end surface 2, having an outer surface 14 and providing a mid-span branch connection; and a second waterproof structure 16 including an elastic contracting sleeve 13 disposed on the outer surface 15 and enveloping the first waterproof structure 12 (please refer to Figs. 5(A) to 5(D)). In addition, according to the cable splice box 1 of the first Embodiment of the present invention, the outer surfaces of the at least two longitudinal elastic pieces 11 jointly (integrally, or combined) and partly define the longitudinal surface 8 (please refer to Figs. 2(A) to 2(C)). In addition, according to the cable splice box 1 of the first Embodiment of the present invention, the pillar 5 is an elastic body 6. In addition, according to the cable splice box 1 of the first Embodiment of the present invention, the bore diameter X is the maximum bore diameters of each of the at least two longitudinal grooves 7. In addition, according to the cable splice box 1 of the first Embodiment of the present invention, each of the at least two longitudinal elastic pieces 11 has two extensions defining two edges of each of the at least two longitudinal slits 9; the slit width Y is selected from the group consisting of an original slit width W₁ less than X and greater than zero, an original slit width W₂ equal to zero, and an original slit width W₃ which is unmeasurable as a result of the two overlapping extensions. In addition, according to the cable splice box 1 of the first Embodiment of the present invention, the cable splice box 1 further includes a waterproof glue having adhesiveness and plasticity (please refer to Figs. 3(B) to 3(C)) and disposed between one of the at least two longitudinal grooves 7 and one of the two cable segments 401 passing therethrough (please refer to Figs. 4(A) to 4(D)). In addition, the first waterproof structure 12 has a cross-section being one of a circle-like and ellipse-like shape (please refer to Fig. 4(D)). A cable splice box 1 used in the first Embodiment of the present invention includes an end surface 2 for a cable 4 passing in and out of the cable splice box 1. The end surface 2 is disposed thereon with a hollow cylindrical tube 3 for the cable 4 for the mid-span branch connection to pass in and out of the cable splice box 1. A hard plastic skin of a portion 402 on the cable 4 for the mid-span branch connection should be unskinned, and then the cable 4 is bent into a U shape. The unskinned portion of the U-shaped cable and the other skinned portion of the two cables segments 401 pass through the hollow cylindrical tube 3 and pass into the cable splice box 1 in a dual-cable manner. The waterproofing treatment between the two cable segments 401 and the hollow cylindrical tube 3 is implemented by using an elastic contracting sleeve 13 (please refer to Fig. 1(C)). Due to the fact that the cross-sections of the two cable segments 401 are circle-like and have different circle centers, if an elastic contracting sleeve 13 is merely used to envelop them and the cylindrical tube 3 by contracting the elastic contracting sleeve 13, there will be a gap between the two cable segments 401 when aligned in parallel and it is not possible to form an effective waterproof structure. Furthermore, the outer diameter of the cable 4 is less than the bore diameter X of the longitudinal groove 7. Therefore, the positions of each of the two cable segments 401 for the waterproofing treatment by the elastic contracting sleeve 13 should be wound with an adequate amount of the adhesive band 17 having adhesiveness and plasticity (please refer to Fig. 4(B)), so that the cross-sections of each of the two segments wound with the adhesive band 17 having adhesiveness and plasticity is in a circle-like shape and the diameters thereof are equal to or fairly greater than the bore diameter X of the cross-section in a circle-like shape of the longitudinal slit 7 of the pillar 5 (please refer to Figs. 2(B) and 4(D)). The portion of the U-shaped cable segments 402 for the mid-span branch connection and the portions of the two cable segments 401 wound with the adhesive band 17 having adhesiveness and plasticity are put and accommodated in the longitudinal groove 7 of the pillar 5. Only manual operation is required to outwardly open the elastic pieces 11 of the opening 10 of the longitudinal groove 7 with fingers to make the original slit width W₁ of the longitudinal groove 7 form the slit width Y after the operation larger than the maximum bore diameter X of the longitudinal groove 7. This makes it easier to put and accommodate the portions of the two cable segments 401, each of which is wound with an adequate amount of the adhesive band having adhesiveness and plasticity in the opening 10. When the fingers release to allow the elastic pieces of the opening 10 to return to their original locations, a first waterproof structure 12 being cylindrical and having a cross-section in a circle-like shape is easily formed between the two cable segments 401 and the pillar 5 (please refer to Figs. 4(A) to 4(D)). Each of the two cable segments 401 is accommodated in and matches the longitudinal groove 7, and therefore each of the two cable segments 401 is not easily separated therefrom before the first waterproof structure 12 is enveloped and contracted by the elastic contracting sleeve 13. In addition, an outer surface of the first waterproof structure 12 being cylindrical can be wound with one more round or an adequate amount of the adhesive band 17 having adhesiveness and plasticity to more perfectly secure the waterproof effect. After the operation of the first waterproof structure 12, the portions 402 for the mid-span branch connection are passed through, or inserted into, the elastic contracting sleeve 13 and the portions of the two cable segments 401, which excludes a portion of the first waterproof structure to be wound with the elastic contracting sleeve 13, are passed into the hollow cylindrical tube 3, so that a portion of the first waterproof structure 12 to be enveloped and contracted by the elastic contracting sleeve 13 connects to each other at a position outside of the hollow cylindrical tube 3. And then the two cable segments 401 passing through the hollow cylindrical tube and passing into the cable splice box 1 are fixed in the cable splice box 1. The elastic contracting tube 13 contracts to envelop the outer surface 14 of the hollow cylindrical tube 3 and connects to the outer surface 15 of the waterproof structure at a position outside of the hollow cylindrical tube 3. Accordingly, the second waterproof structure 16 is formed between the hollow cylindrical tube 3 and the first waterproof structure 12. The cable splice box 1 used in the first Embodiment of the present invention can form a first waterproof structure having a cross-section in a circle-like shape between the pillar 5 and the two cable segments 401 via a simple operation. It will be very convenient to use an elastic contracting sleeve 13 to implement the waterproofing treatment between the cable 4 for a mid-span branch connection and the hollow cylindrical tube 3, by which the problems of the difficult operation, high cost and inconsistent construction quality in the prior art can be overcome. Moreover, each of the elastic pieces 11 of the longitudinal groove 7 matches the gap between the pillar 5 and the two cable segments 401 to form the first waterproof structure 12, and the elastic contracting sleeve 13 contracts to the first waterproof structure. Therefore, the radial contracting force exerted by the elastic contracting sleeve 13 is sufficient and long-lasting and used to maintain the tightness between the pillar 5 and the two cable segments 401. It is clear to see that the cable splice box in the first Embodiment of the present invention can certainly overcome the shortages of the prior art.

### The second Embodiment

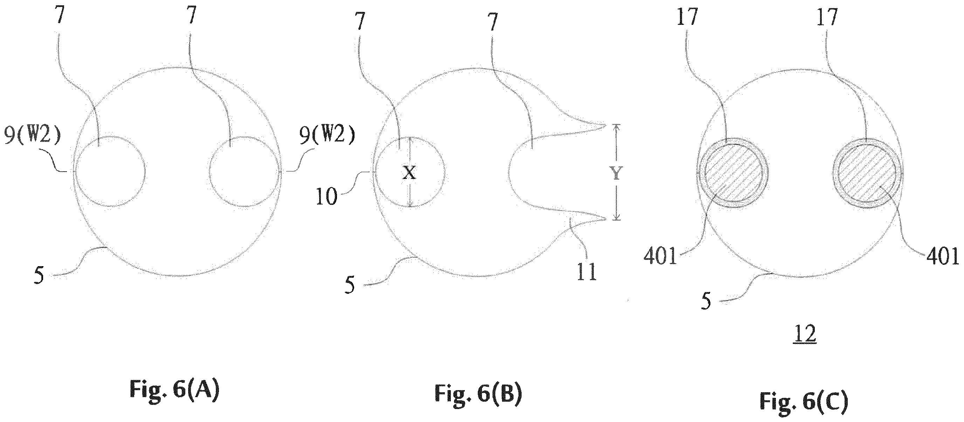

Please refer to Figs. 6(A) to 6(C) and Figs. 1(A) to 5(D). Fig. 6(A) is a diagram showing a cross-section of a pillar included in a cable splice box 1 according to the second Embodiment of the present invention. The difference between the pillar 5 of the second Embodiment and that of the first Embodiment is that the original slit width W₂ of the two grooves 7 of the pillar 5 used in the second Embodiment equals 0 (please refer to Figs. 6(A) to 6(C)), representing that the two edges of the openings 10 on the longitudinal groove 7 contact each other.

### The third Embodiment

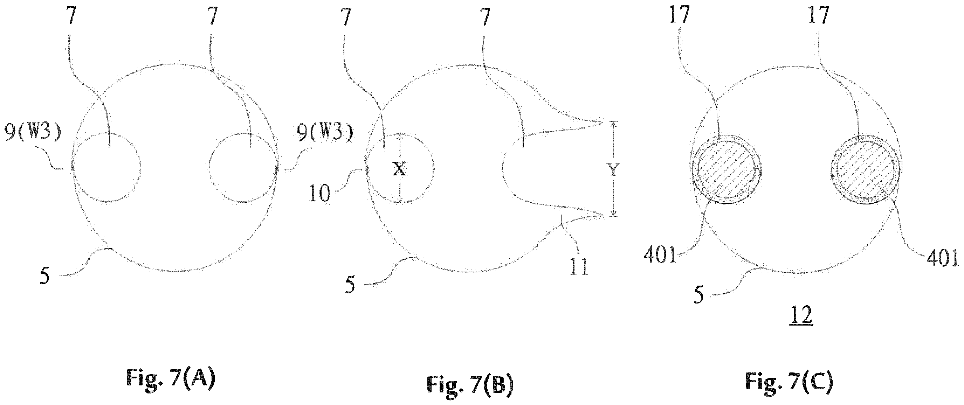

Please refer to Figs. 7(A) to7(C) and Figs. 1 (A) to 5(D). Fig. 6(A) is a diagram showing a cross-section of a pillar included in a cable splice box 1 according to the third Embodiment of the present invention. The difference between the pillar 5 of the third Embodiment and that of the first Embodiment is that the original slit width W₃ of the two grooves 7 of the pillar 5 is unable to be measured as a result of the two overlapping extensions (please refer to Fig. 7(A) to 7(C)), indicating that the two edges of the openings 10 of the two grooves 7 surpass each other.

Based on the descriptions of the above first, second and third Embodiments, the cable splice box of the present invention overcomes the shortcomings of the prior art and is more convenient to implement the waterproofing treatment using the elastic contracting sleeve for the operation between the cable for a mid-span branch connection and the cable inlet and outlet of the cable splice box. This makes the operation much easier, the cost lower and the construction quality more consistent, and thereby improves the construction quality of the fiber-optic network of the telecommunication vendors.

## Claims

1. A cable splice box (1), **characterized by** comprising:
an end surface (2) passing therethrough a cable (4) having two cable segments (401) respectively passing in and out the cable splice box (1);
a first waterproof structure (12), including:
a pillar (5) including:
a pillar body (6) having at least two longitudinal grooves (7), each of which has a bore diameter X configured to accommodate one of the two cable segments (401);
a longitudinal surface (8) having at least two longitudinal slits (9), each of which has an operating slit width Y larger than or equal to X, corresponds to one of the at least two longitudinal grooves (7), and forms an opening (10) thereon; and
at least two longitudinal elastic pieces (11), each of which forms one edge of one of the at least two longitudinal slits (9); and
a hollow cylindrical tube (3) disposed on the end surface (2), having an outer surface (14) and providing a mid-span branch connection; and
a second waterproof structure (16) including an elastic contracting sleeve (13) disposed on the outer surface (14) and enveloping the first waterproof structure (12), **characterized in that** the elastic contracting sleeve (13) exerts a radial contracting force on the first waterproof structure (12) to continuously maintain tightness between the pillar body (6) and the two cable segments (401) included in the first waterproof structure (12), and the at least two longitudinal elastic pieces (11) are in place both before and after formation of the first and second waterproof structures (12, 16).

2. The cable splice box (1) according to Claim 1, **characterized in that** outer surfaces of the at least two longitudinal elastic pieces (11) jointly and partly define the longitudinal surface (8).

3. The cable splice box (1) according to Claim 1 or 2, **characterized in that** the pillar (5) is an elastic body.

4. The cable splice box (1) according to any one of Claims 1-3, **characterized in that** the bore diameter X is one of the minimum and maximum bore diameters of each of the at least two longitudinal grooves (7).

5. The cable splice box (1) according to any one of Claims 1-4, **characterized in that** each of the at least two longitudinal elastic pieces (11) has two extensions defining two edges of each of the at least two longitudinal slits (9), each of which has an original slit width being one selected from the group consisting of W₁ less than X and greater than zero, W₂ equal to zero, and W₃ which is unmeasurable as a result of the two overlapping extensions.

6. The cable splice box (1) according to any one of Claims 1-5, further **characterized by** comprising a waterproof glue (17) having adhesiveness and plasticity and disposed between one of the at least two longitudinal grooves (7) and one of the two cable segments (401) passing therethrough.

7. The cable splice box (1) according to any one of Claims 1-6, **characterized in that** the first waterproof structure (12) has a cross-section being one of a circle-like and ellipse-like shape.

8. A method for forming a cable splice box (1), **characterized by** comprising steps of:
configuring an end surface (2) to pass therethrough a cable (4) having two cable segments (401) respectively passing in and out the cable splice box (1) and having an average cable diameter Z and a minimum cable diameter;
constructing a first waterproof structure (12), including:
providing a pillar (5), including:
a pillar body (6) having two longitudinal grooves (7), each of which has a first bore diameter X being barely larger than Z and a second bore diameter X₁ barely larger than the minimum cable diameter and is configured to accommodate one of the two cable segments (401);
a longitudinal surface (8) having at least two longitudinal slits (9), each of which has an operating slit width Y larger than or equal to X, corresponds to one of the two longitudinal grooves (7), and forms an opening (10) thereon; and
at least two longitudinal elastic pieces (11), each of which is disposed on one of the at least two longitudinal slits (9); and
disposing a hollow cylindrical tube (3) on the end surface (2), wherein the hollow cylindrical tube (3) has an outer surface (14) and provides a mid-span branch connection; and
constructing a second waterproof structure (16) including an elastic contracting sleeve (13) disposed on the outer surface (14) and enveloping the first waterproof structure (12), **characterized in that** the elastic contracting sleeve (13) exerts a radial contracting force on the first waterproof structure (12) to continuously maintain tightness between the pillar body (6) and the two cable segments (401) included in the first waterproof structure (12), and the at least two longitudinal elastic pieces (11) are in place both before and after formation of the first and second waterproof structures (12, 16).

9. The method according to Claim 8, further **characterized by** comprising a waterproof glue (17) having adhesiveness and plasticity and disposed between one of the at least two longitudinal grooves (7) and one of the two cable segments (401) passing therethrough, and wherein outer surfaces of the at least two longitudinal elastic pieces (11) jointly and partly define the longitudinal surface (8), the pillar (5) is an elastic body, and the first waterproof structure (12) has a cross-section being one of a circle-like and ellipse-like shape.

10. The method according to Claim 8 or 9, **characterized in that**:
the bore diameter X is one of the minimum and maximum bore diameters of each of the at least two longitudinal grooves (7); and
each of the at least two longitudinal elastic pieces (11) has two extensions defining two edges of each of the at least two longitudinal slits (9), each of which has an original slit width being one selected from the group consisting of W₁ less than X and greater than zero, W₂ equal to zero, and W₃ which is unmeasurable as a result of the two overlapping extensions.

11. A waterproof splice box unit (1), **characterized by** comprising:
a first waterproof structure (12), including:
a pillar (5), including:
a pillar body (6) having at least two longitudinal grooves (7), each of which has a bore diameter X configured to accommodate a cable segment (401);
a longitudinal surface (8) having at least two longitudinal slits (9), each of which has an operating slit width Y larger than or equal to X, corresponds to one of the two longitudinal grooves (7), and forms an opening (10) thereon; and
two longitudinal elastic pieces (11), each of which is disposed on one of the at least two longitudinal slits (9) to keep the cable segment (401) in the respective longitudinal groove (7), and
a second waterproof structure (16) including an elastic contracting sleeve (13) enveloping the first waterproof structure (12), **characterized in that** the elastic contracting sleeve (13) exerts a radial contracting force on the pillar (5) to continuously maintain tightness between the pillar body (6) and the cable segment (401) included in the first waterproof structure (12).

12. The waterproof splice box unit (1) according to Claim 11, **characterized in that** outer surfaces of the at least two longitudinal elastic pieces (11) jointly and partly define the longitudinal surface (8), the pillar (5) is an elastic body, and the longitudinal elastic pieces (11) are in place both before and after formation of the first waterproof structure (12).

13. The waterproof splice box unit (1) according to Claim 11 or 12, **characterized in that**:
the bore diameter X is one of the minimum and maximum bore diameters of each of the at least two longitudinal grooves (7); and each of the at least two longitudinal elastic pieces (11) has two extensions defining two edges of each of the at least two longitudinal slits (9), each of which has an original slit width being one selected from the group consisting of W₁ less than X and greater than zero, W₂ equal to zero, and W₃ which is unmeasurable as a result of the two overlapping extensions.

14. The waterproof splice box unit (1) according to any one of Claims 11-13, **characterized in that** the first waterproof structure (12) has a cross-section being one of a circle-like and ellipse-like shape.

15. The waterproof splice box unit (1) according to any one of Claims 11-14, further **characterized by** comprising a waterproof glue (17) having adhesiveness and plasticity and disposed between one of the at least two longitudinal grooves (7) and the cable segment (401) passing therethrough.

## Patentansprüche

1. Kabelverbindungsdose (1), **dadurch gekennzeichnet, dass** sie Folgendes umfasst:
eine Endoberfläche (2), durch die ein Kabel (4) mit zwei Kabelsegmenten (401) hindurchgeht, die jeweils in die Kabelverbindungsdose (1) hinein- und herausgehen;
eine erste wasserdichte Struktur (12), die Folgendes beinhaltet:
eine Säule (5), die Folgendes beinhaltet:
einen Säulenkörper (6) mit wenigstens zwei longitudinalen Rillen (7), von denen jede einen Bohrungsdurchmesser X aufweist, der so konfiguriert ist, dass sie eines der zwei Kabelsegmente (401) aufnimmt;
eine longitudinale Oberfläche (8) mit wenigstens zwei longitudinalen Schlitzen (9), von denen jeder eine Arbeitsschlitzbreite Y größer als oder gleich X aufweist, einer der wenigstens zwei longitudinalen Rillen (7) entspricht und eine Öffnung (10) darauf bildet; und
wenigstens zwei longitudinale elastische Stücke (11), von denen jedes auf einen Rand von einem der wenigstens zwei longitudinalen Schlitze (9) bildet; und
eine hohle zylindrische Röhre (3), die auf der Endoberfläche (2) angeordnet ist, eine Außenoberfläche (14) aufweist und eine Mittelteilzweigverbindung bereitstellt; und
eine zweite wasserdichte Struktur (16) einschließlich einer elastischen sich zusammenziehenden Hülle (13), die auf der Außenoberfläche (14) angeordnet ist und die erste wasserdichte Struktur (12) umhüllt, **dadurch gekennzeichnet, dass** die elastische sich zusammenziehende Hülle (13) eine radiale Kontraktionskraft auf die erste wasserdichte Struktur (12) ausübt, um eine Dichtheit zwischen dem Säulenkörper (6) und den zwei Kabelsegmenten (401), die in der ersten wasserdichten Struktur (12) enthalten sind, kontinuierlich aufrechtzuerhalten, und wobei sich die wenigstens zwei longitudinalen elastischen Stücke (11) sowohl vor als auch nach der Bildung der ersten und zweiten wasserdichten Struktur (12, 16) an ihrer Stelle befinden.

2. Kabelverbindungsdose (1) nach Anspruch 1, **dadurch gekennzeichnet, dass** die Außenoberflächen der wenigstens zwei longitudinalen elastischen Stücke (11) gemeinsam und teilweise die longitudinale Oberfläche (8) definieren.

3. Kabelverbindungsdose (1) nach Anspruch 1 oder 2, **dadurch gekennzeichnet, dass** die Säule (5) ein elastischer Körper ist.

4. Kabelverbindungsdose (1) nach einem der Ansprüche 1-3, **dadurch gekennzeichnet, dass** der Bohrungsdurchmesser X einer von dem minimalen und maximalen Bohrungsdurchmesser von jeder der wenigstens zwei longitudinalen Rillen (7) ist.

5. Kabelverbindungsdose (1) nach einem der Ansprüche 1-4, **dadurch gekennzeichnet, dass** jedes der wenigstens zwei longitudinalen elastischen Stücke (11) zwei Ausdehnungen aufweist, die zwei Ränder von jedem der wenigstens zwei longitudinalen Schlitze (9) definieren, von denen jeder eine ursprüngliche Schlitzbreite aufweist, die eine ist, die aus der Gruppe ausgewählt ist, die aus W₁ kleiner als X und größer als null, W₂ gleich null und W₃, die infolge der zwei überlappenden Ausdehnungen nicht messbar ist, besteht.

6. Kabelverbindungsdose (1) nach einem der Ansprüche 1-5, die ferner **dadurch gekennzeichnet ist, dass** sie einen wasserdichten Klebstoff (17) umfasst, der eine Klebefähigkeit und Plastizität aufweist und zwischen einer der wenigstens zwei longitudinalen Rillen (7) und einem der zwei Kabelsegmente (401), die dort hindurchgehen, angeordnet ist.

7. Kabelverbindungsdose (1) nach einem der Ansprüche 1-6, **dadurch gekennzeichnet, dass** die erste wasserdichte Struktur (12) einen Querschnitt aufweist, der einer von einer kreisartigen und einer ellipsenartigen Form ist.

8. Verfahren zum Bilden einer Kabelverbindungsdose (1), **dadurch gekennzeichnet, dass** es die folgenden Schritte umfasst:
Konfigurieren einer Endoberfläche (2), so dass ein Kabel (4) mit zwei Kabelsegmenten (401) durch sie hindurchgeht, die jeweils in die Kabelverbindungsdose (1) hinein- und herausgehen und einen durchschnittlichen Kabeldurchmesser Z und einen minimalen Kabeldurchmesser aufweisen;
Konstruieren einer ersten wasserdichten Struktur (12), was Folgendes beinhaltet:
Bereitstellen einer Säule (5), die Folgendes beinhaltet:
einen Säulenkörper (6) mit zwei longitudinalen Rillen (7), von denen jede einen ersten Bohrungsdurchmesser X, der kaum größer als Z ist, und einen zweiten Bohrungsdurchmesser X₁, der kaum größer als der minimale Kabeldurchmesser ist, aufweist und so konfiguriert ist, dass sie eines der zwei Kabelsegmente (401) aufnimmt;
eine longitudinale Oberfläche (8) mit wenigstens zwei longitudinalen Schlitzen (9), von denen jeder eine Arbeitsschlitzbreite Y größer als oder gleich X aufweist, einer der wenigstens zwei longitudinalen Rillen (7) entspricht und eine Öffnung (10) darauf bildet; und
wenigstens zwei longitudinale elastische Stücke (11), von denen jedes auf einem der wenigstens zwei longitudinalen Schlitze (9)angeordnet ist; und
Anordnen einer hohlen zylindrischen Röhre (3) auf der Endoberfläche (2), wobei die hohle zylindrische Röhre (3) eine Außenoberfläche (14) aufweist und eine Mittelteilzweigverbindung bereitstellt; und
Konstruieren einer zweiten wasserdichten Struktur (16) einschließlich einer elastischen sich zusammenziehenden Hülle (13), die auf der Außenoberfläche (14) angeordnet ist und die erste wasserdichte Struktur (12) umhüllt, **dadurch gekennzeichnet, dass** die elastische sich zusammenziehende Hülle (13) eine radiale Kontraktionskraft auf die erste wasserdichte Struktur (12) ausübt, um eine Dichtheit zwischen dem Säulenkörper (6) und den zwei Kabelsegmenten (401), die in der ersten wasserdichten Struktur (12) enthalten sind, kontinuierlich aufrechtzuerhalten, und wobei sich die wenigstens zwei longitudinalen elastischen Stücke (11) sowohl vor als auch nach der Bildung der ersten und zweiten wasserdichten Struktur (12, 16) an ihrer Stelle befinden.

9. Verfahren nach Anspruch 8, ferner **dadurch gekennzeichnet, dass** es einen wasserdichten Klebstoff (17) umfasst, der eine Klebefähigkeit und Plastizität aufweist und zwischen einer der wenigstens zwei longitudinalen Rillen (7) und einem der zwei Kabelsegmente (401), die dort hindurchgehen, angeordnet ist, und wobei Außenoberflächen der wenigstens zwei longitudinalen elastischen Stücke (11) gemeinsam und teilweise die longitudinale Oberfläche (8) definieren, die Säule (5) ein elastischer Körper ist und die erste wasserdichte Struktur (12) einen Querschnitt aufweist, der einer von einer kreisartigen und einer ellipsenartigen Form ist.

10. Verfahren nach Anspruch 8 oder 9, **dadurch gekennzeichnet, dass**:
der Bohrungsdurchmesser X einer von dem minimalen und maximalen Bohrungsdurchmesser von jeder der wenigstens zwei longitudinalen Rillen (7) ist; und
jedes der wenigstens zwei longitudinalen Stücke (11) zwei Ausdehnungen aufweist, die zwei Ränder von jedem der wenigstens zwei longitudinalen Schlitze (9) definieren, von denen jeder eine ursprüngliche Schlitzbreite aufweist, die eine ist, die aus der Gruppe ausgewählt ist, die aus W₁ kleiner als X und größer als null, W₂ gleich null und W₃, die infolge der zwei überlappenden Ausdehnungen nicht messbar ist, besteht.

11. Wasserdichte Verbindungsdoseneinheit (1), **dadurch gekennzeichnet, dass** sie Folgendes umfasst:
eine erste wasserdichte Struktur (12), die Folgendes beinhaltet:
eine Säule (5), die Folgendes beinhaltet:
einen Säulenkörper (6) mit wenigstens zwei longitudinalen Rillen (7), von denen jede einen Bohrungsdurchmesser X aufweist, der so konfiguriert ist, dass sie eines der zwei Kabelsegmente (401) aufnimmt;
eine longitudinale Oberfläche (8) mit wenigstens zwei longitudinalen Schlitzen (9), von denen jeder eine Arbeitsschlitzbreite Y größer als oder gleich X aufweist, einer der wenigstens zwei longitudinalen Rillen (7) entspricht und eine Öffnung (10) darauf bildet; und
zwei longitudinale elastische Stücke (11), von denen jedes auf einem der wenigstens zwei longitudinalen Schlitze (9) angeordnet ist, um das Kabelsegment (401) in der jeweiligen longitudinalen Rille (7) zu halten; und
eine zweite wasserdichte Struktur (16) einschließlich einer elastischen sich zusammenziehenden Hülle (13), die die erste wasserdichte Struktur (12) umhüllt, **dadurch gekennzeichnet, dass** die elastische sich zusammenziehende Hülle (13) eine radiale Kontraktionskraft auf die Säule (5) ausübt, um eine Dichtheit zwischen dem Säulenkörper (6) und dem Kabelsegment (401), das in der ersten wasserdichten Struktur (12) enthalten ist, kontinuierlich aufrechtzuerhalten.

12. Wasserdichte Verbindungsdoseneinheit (1) nach Anspruch 11, **dadurch gekennzeichnet, dass** Außenoberflächen der wenigstens zwei longitudinalen elastischen Stücke (11) gemeinsam und teilweise die longitudinale Oberfläche (8) definieren, die Säule (5) ein elastischer Körper ist und sich die longitudinalen elastischen Stücke (11) sowohl vor als auch nach der Bildung der ersten wasserdichten Strukturen (12) an ihrer Stelle befinden.

13. Wasserdichte Verbindungsdoseneinheit (1) nach Anspruch 11 oder 12, **dadurch gekennzeichnet, dass**:
der Bohrungsdurchmesser X einer von dem minimalen und maximalen Bohrungsdurchmesser von jeder der wenigstens zwei longitudinalen Rillen (7) ist; und jedes der wenigstens zwei longitudinalen elastischen Stücke (11) zwei Ausdehnungen aufweist, die zwei Ränder von jedem der wenigstens zwei longitudinalen Schlitze (9) definieren, von denen jeder eine ursprüngliche Schlitzbreite aufweist, die eine ist, die aus der Gruppe ausgewählt ist, die aus W₁ kleiner als X und größer als null, W₂ gleich null und W₃, die infolge der zwei überlappenden Ausdehnungen nicht messbar ist, besteht.

14. Wasserdichte Verbindungsdoseneinheit (1) nach einem der Ansprüche 11-13, **dadurch gekennzeichnet, dass** die erste wasserdichte Struktur (12) einen Querschnitt aufweist, der einer von einer kreisartigen und einer ellipsenartigen Form ist.

15. Wasserdichte Verbindungsdoseneinheit (1) nach einem der Ansprüche 11-14, die ferner **dadurch gekennzeichnet ist, dass** sie einen wasserdichten Klebstoff (17) umfasst, der eine Klebefähigkeit und Plastizität aufweist und zwischen einer der wenigstens zwei longitudinalen Rillen (7) und dem Kabelsegment (401), das dort hindurchgeht, angeordnet ist.

## Revendications

1. Boîtier d'épissage de câble (1), **caractérisé en ce qu'**il comprend :
une surface d'extrémité (2) faisant passer à travers elle un câble (4) ayant deux segments de câble (401) passant respectivement à l'intérieur et l'extérieur du boîtier d'épissage de câbles (1) ;
une première structure étanche à l'eau (12), comportant :
une colonne (5) comportant :
un corps de colonne (6) ayant au moins deux rainures longitudinales (7), dont chacune a un diamètre d'alésage X configuré pour accueillir un des deux segments de câble (401) ;
une surface longitudinale (8) ayant au moins deux fentes longitudinales (9), dont chacune a une largeur opérationnelle de fente Y supérieure ou égale à X, correspond à une des au moins deux rainures longitudinales (7), et forme une ouverture (10) sur celle-ci ; et
au moins deux pièces longitudinales élastiques (11), dont chacune forme sur un bord d'une des au moins deux fentes longitudinales (9) ; et
un tube cylindrique creux (3) disposé sur la surface d'extrémité (2), ayant une surface extérieure (14) et fournissant une connexion de dérivation médiane ; et
une deuxième structure étanche à l'eau (16) comportant un manchon à contraction élastique (13) disposé sur la surface extérieure (14) et enveloppant la première structure étanche à l'eau (12), **caractérisé en ce que** le manchon à contraction élastique (13) exerce une force de contraction radiale sur la première structure étanche à l'eau (12) pour maintenir en permanence une étanchéité entre le corps de colonne (6) et les deux segments de câble (401) contenus dans la première structure étanche à l'eau (12), et les au moins deux pièces longitudinales élastiques (11) sont en place à la fois avant et après la formation des première et deuxième structures étanches à l'eau (12, 16) .

2. Boîtier d'épissage de câble (1) selon la revendication 1, **caractérisé en ce que** des surfaces extérieures des au moins deux pièces longitudinales élastiques (11) définissent conjointement et partiellement la surface longitudinale (8).

3. Boîtier d'épissage de câble (1) selon la revendication 1 ou 2, **caractérisé en ce que** la colonne (5) est un corps élastique.

4. Boîtier d'épissage de câble (1) selon l'une quelconque des revendications 1 à 3, **caractérisé en ce que** le diamètre d'alésage X est un des diamètres d'alésage minimal et maximal de chacune des au moins deux rainures longitudinales (7).

5. Boîtier d'épissage de câble (1) selon l'une quelconque des revendications 1 à 4, **caractérisé en ce que** chacune des au moins deux pièces longitudinales élastiques (11) a deux prolongements définissant deux bords de chacune des au moins deux fentes longitudinales (9), dont chacune a une largeur initiale de fente qui en est une choisie dans le groupe constitué par W₁ inférieur à X et supérieur à zéro, W₂ égal à zéro, et W₃ qui n'est pas mesurable en raison des deux prolongements se chevauchant.

6. Boîtier d'épissage de câble (1) selon l'une quelconque des revendications 1 à 5, **caractérisé en outre en ce qu'**il comprend une colle étanche à l'eau (17) ayant une adhésivité et une plasticité et disposée entre une des au moins deux rainures longitudinales (7) et un des deux segments de câble (401) passant à travers.

7. Boîtier d'épissage de câble (1) selon l'une quelconque des revendications 1 à 6, **caractérisé en ce que** la première structure étanche à l'eau (12) a une section transversale qui est en forme de cercle ou en forme d'ellipse.

8. Procédé de formation d'un boîtier d'épissage de câble (1), **caractérisé en ce qu'**il comprend les étapes consistant à :
configurer une surface d'extrémité (2) pour faire passer à travers elle un câble (4) ayant deux segments de câble (401) passant respectivement à l'intérieur et l'extérieur du boîtier d'épissage de câble (1) et ayant un diamètre moyen de câble Z et un diamètre minimal de câble ;
construire une première structure étanche à l'eau (12), notamment :
se procurer une colonne (5), comportant :
un corps de colonne (6) ayant deux rainures longitudinales (7), dont chacune a un premier diamètre d'alésage X qui est à peine plus grand que Z et un deuxième diamètre d'alésage X₁ à peine plus grand que le diamètre minimal de câble et est configurée pour accueillir un des deux segments de câble (401) ;
une surface longitudinale (8) ayant au moins deux fentes longitudinales (9), dont chacune a une largeur opérationnelle de fente Y supérieure ou égale à X, correspond à une des deux rainures longitudinales (7), et forme une ouverture (10) sur celle-ci ; et
au moins deux pièces longitudinales élastiques (11), dont chacune est disposée sur une des au moins deux fentes longitudinales (9) ; et
disposer un tube cylindrique creux (3) sur la surface d'extrémité (2), le tube cylindrique creux (3) ayant une surface extérieure (14) et fournissant une connexion de dérivation médiane ; et
construire une deuxième structure étanche à l'eau (16) comportant un manchon à contraction élastique (13) disposé sur la surface extérieure (14) et enveloppant la première structure étanche à l'eau (12), **caractérisé en ce que** le manchon à contraction élastique (13) exerce une force de contraction radiale sur la première structure étanche à l'eau (12) pour maintenir en permanence une étanchéité entre le corps de colonne (6) et les deux segments de câble (401) contenus dans la première structure étanche à l'eau (12), et les au moins deux pièces longitudinales élastiques (11) sont en place à la fois avant et après la formation des première et deuxième structures étanches à l'eau (12, 16) .

9. Procédé selon la revendication 8, **caractérisé en outre en ce qu'**il comprend une colle étanche à l'eau (17) ayant une adhésivité et une plasticité et disposée entre une des au moins deux rainures longitudinales (7) et un des deux segments de câble (401) passant à travers, et dans lequel des surfaces extérieures des au moins deux pièces longitudinales élastiques (11) définissent conjointement et partiellement la surface longitudinale (8), la colonne (5) est un corps élastique, et la première structure étanche à l'eau (12) a une section transversale qui est en forme de cercle ou en forme d'ellipse.

10. Procédé selon la revendication 8 ou 9, **caractérisé en ce que** :
le diamètre d'alésage X est un des diamètres d'alésage minimal et maximal de chacune des au moins deux rainures longitudinales (7) ; et
chacune des au moins deux pièces longitudinales élastiques (11) a deux prolongements définissant deux bords de chacune des au moins deux fentes longitudinales (9), dont chacune a une largeur initiale de fente qui en est une choisie dans le groupe constitué par W₁ inférieur à X et supérieur à zéro, W₂ égal à zéro, et W₃ qui n'est pas mesurable en raison des deux prolongements se chevauchant.

11. Unité de boîtier d'épissage étanche à l'eau (1), **caractérisée en ce qu'**elle comprend :
une première structure étanche à l'eau (12), comportant :
une colonne (5), comportant :
un corps de colonne (6) ayant au moins deux rainures longitudinales (7), dont chacune a un diamètre d'alésage X configuré pour accueillir un segment de câble (401) ;
une surface longitudinale (8) ayant au moins deux fentes longitudinales (9), dont chacune a une largeur opérationnelle de fente Y supérieure ou égale à X, correspond à une des deux rainures longitudinales (7), et forme une ouverture (10) sur celle-ci ; et
deux pièces longitudinales élastiques (11), dont chacune est disposée sur une des au moins deux fentes longitudinales (9) pour maintenir le segment de câble (401) dans la rainure longitudinale respective (7), et
une deuxième structure étanche à l'eau (16) comportant un manchon à contraction élastique (13) enveloppant la première structure étanche à l'eau (12), **caractérisée en ce que** le manchon à contraction élastique (13) exerce une force de contraction radiale sur la colonne (5) pour maintenir en permanence une étanchéité entre le corps de colonne (6) et le segment de câble (401) contenu dans la première structure étanche à l'eau (12).

12. Unité de boîtier d'épissage étanche à l'eau (1) selon la revendication 11, **caractérisée en ce que** des surfaces extérieures des au moins deux pièces longitudinales élastiques (11) définissent conjointement et partiellement la surface longitudinale (8), la colonne (5) est un corps élastique, et les pièces longitudinales élastiques (11) sont en place à la fois avant et après la formation des premières structures étanches à l'eau (12).

13. Unité de boîtier d'épissage étanche à l'eau (1) selon la revendication 11 ou 12, **caractérisée en ce que** : le diamètre d'alésage X est un des diamètres d'alésage minimal et maximal de chacune des au moins deux rainures longitudinales (7) ; et chacune des au moins deux pièces longitudinales élastiques (11) a deux prolongements définissant deux bords de chacune des au moins deux fentes longitudinales (9), dont chacune a une largeur initiale de fente qui en est une choisie dans le groupe constitué par W₁ inférieur à X et supérieur à zéro, W₂ égal à zéro, et W₃ qui n'est pas mesurable en raison des deux prolongements se chevauchant.

14. Unité de boîtier d'épissage étanche à l'eau (1) selon l'une quelconque des revendications 11 à 13, **caractérisée en ce que** la première structure étanche à l'eau (12) a une section transversale qui est en forme de cercle ou en forme d'ellipse.

15. Unité de boîtier d'épissage étanche à l'eau (1) selon l'une quelconque des revendications 11 à 14, **caractérisée en outre en ce qu'**elle comprend une colle étanche à l'eau (17) ayant une adhésivité et une plasticité et disposée entre une des au moins deux rainures longitudinales (7) et le segment de câble (401) passant à travers.
